# EUROPEAN PATENT APPLICATION

(11) **EP 4 297 121 A1**
(43) Date of publication of application: **27.12.2023**
(21) Application number: 22756114.9
(22) Date of filing: 14.02.2022
(51) Int. Cl.: H01M 4/13, H01M 4/139, H01M 4/62, H01M 10/0562, H01M 10/0565

(54) **BINDER SOLUTION, SLURRY, SOLID ELECTROLYTE LAYER, ELECTRODE, AND ALL-SOLID BATTERY**

(30) Priority: 16.02.2021 JP 2021022818
(71) Applicant: Kureha Corporation, Chuo-ku Tokyo 103-8552 (JP)
(72) Inventor: SHIKE Aya, Tokyo 103-8552 (JP); NAGASAWA Yoshiyuki, Tokyo 103-8552 (JP); IGARASHI Tamito, Tokyo 103-8552 (JP)
(74) Representative: Zimmermann & Partner Patentanwälte mbB
(86) International application number: PCT/JP2022/005595
(87) International publication number: WO 2022/176796

(57) **Abstract**

Provided are a binder solution, an electrode mixture, an electrode, and an all-solid-state battery, which use an organic solvent having low reactivity with a solid electrolyte and in which a binder easily dissolves. The binder solution for an all-solid-state battery contains: a binder made of a vinylidene fluoride polymer; and an organic solvent. The organic solvent is at least one selected from the group consisting of a cyclic ether, a ketone, and an ester. The organic solvent has a boiling point of 60°C or higher and 160°C or lower. A residual moisture content of the organic solvent is 300 ppm or less.

## Description

### TECHNICAL FIELD

The present invention relates to a binder solution, a slurry, a solid electrolyte layer, an electrode, an electrode, and an all-solid-state battery.

### BACKGROUND ART

An electrode in an all-solid-state battery is produced by, for example, mixing a vinylidene fluoride polymer as a binder, an active material, a solid electrolyte, and a solvent to produce a slurry, applying the slurry to a current collector, and drying the slurry. There is a concern that, when the solvent used at this time reacts with the solid electrolyte, an ionic conductivity of the solid electrolyte decreases, resulting in a decrease in battery performance. Therefore, the solvent is required to have low reactivity with the solid electrolyte, and butyl butyrate or the like has been typically used, as described in Patent Documents 1 and 2.

However, the vinylidene fluoride polymer has low solubility in the solvent (e.g., butyl butyrate) and the slurry is a dispersion in which the vinylidene fluoride polymer is dispersed in the solvent. Accordingly, uniformity of the vinylidene fluoride in the slurry is poor as compared with a solution in which the polymer is dissolved in the solvent, and the active material and the vinylidene fluoride may react with each other to generate an aggregate in the step of producing the slurry. Therefore, a slurry using a solvent having low reactivity with the solid electrolyte and in which the vinylidene fluoride easily dissolves is required.

As a technique using a solvent other than butyl butyrate, Patent Document 3 discloses a polymer solution obtained by mixing a vinylidene fluoride polymer and ethylene glycol monobutyl ether acetate. This polymer solution is intended to be used for a non-aqueous electrolyte secondary battery.

### Citation List

### Patent Literature

Patent Document 1: JP 2016-025025 A
Patent Document 2: JP 2016-025027 A
Patent Document 3: WO 2019/230140

### SUMMARY OF INVENTION

### TECHNICAL PROBLEM

However, investigation by the present inventors has found that, even when ethylene glycol monobutyl ether acetate is used as a solvent, the vinylidene fluoride polymer is not uniformly dissolved and is in a dispersed state, and that, when a slurry containing the solvent and a solid electrolyte is applied and dried to form a solid electrolyte layer, the ionic conductivity becomes very low.

The present invention has been made in view of the above problems, and an object thereof is to provide a binder solution, a slurry, a solid electrolyte layer, an electrode, and an all-solid-state battery, which use an organic solvent having low reactivity with a solid electrolyte and in which a binder easily dissolves.

### SOLUTION TO PROBLEM

As a result of intensive studies to solve the above problems, the present inventors have found that the above problems can be solved by using a specific organic solvent having a boiling point in a specific range and a residual moisture content that is a specific amount or less, and arrived at the present invention.

The present invention relates to a binder solution for an all-solid-state battery, the binder solution containing: a binder made of a vinylidene fluoride polymer; and an organic solvent,
in which the organic solvent is at least one selected from the group consisting of a cyclic ether, a ketone, and an ester,
the organic solvent has a boiling point of 60°C or higher and 160°C or lower, and
a residual moisture content of the organic solvent is 300 ppm or less.

The organic solvent preferably has a boiling point of 80°C or higher and 160°C or lower.

The organic solvent is preferably at least one selected from the group consisting of 1,4-dioxane, ethyl butyrate, amyl acetate, isopropyl acetate, and ethyl propionate.

The vinylidene fluoride polymer is preferably a copolymer including a structural unit derived from vinylidene fluoride and a structural unit derived from hexafluoropropylene, and a content of the structural unit derived from hexafluoropropylene is preferably 15 mass% or more with respect to all structural units of the copolymer.

The present invention also relates to a slurry containing the binder solution and a solid electrolyte.

The present invention also relates to a solid electrolyte layer produced from the slurry.

The solid electrolyte layer preferably has an ionic conductivity of 0.05 × 10⁻³ S/cm or more.

The present invention also relates to an electrode mixture containing the slurry and an active material.

The present invention also relates to an electrode including the solid electrolyte layer.

The present invention also relates to an all-solid-state battery including the solid electrolyte layer.

### ADVANTAGEOUS EFFECTS OF INVENTION

The present invention can provide a binder solution, a slurry, a solid electrolyte layer, an electrode, and an all-solid-state battery, which use an organic solvent having low reactivity with a solid electrolyte and in which a binder easily dissolves.

### DESCRIPTION OF EMBODIMENTS

### Binder Solution for All-solid-state Battery

A binder solution for an all-solid-state battery of the present invention contains a binder made of a vinylidene fluoride polymer; and an organic solvent. The organic solvent is at least one selected from the group consisting of a cyclic ether, a ketone, and an ester. The organic solvent has a boiling point of 60°C or higher and 160°C or lower. A residual moisture content of the organic solvent is 300 ppm or less.

Hereinafter, each component forming the binder solution for an all-solid-state battery will be described.

### Binder

In the present invention, a vinylidene fluoride polymer is used as a binder. The vinylidene fluoride polymer includes a homopolymer of vinylidene fluoride (VDF) and a copolymer of VDF and any other monomer (hereinafter, also referred to as "vinylidene fluoride copolymer"). The other monomer in the vinylidene fluoride copolymer is not particularly limited, and examples thereof include fluorine-based monomers and hydrocarbon-based monomers such as ethylene and propylene, which are copolymerizable with vinylidene fluoride. Examples of the fluorine-based monomers which are copolymerizable with vinylidene fluoride include vinyl fluoride, trifluoroethylene, tetrafluoroethylene, chlorotrifluoroethylene, hexafluoropropylene, and perfluoroalkyl vinyl ethers represented by perfluoromethyl vinyl ether. Among them, hexafluoropropylene is preferable from the viewpoint of adhesiveness. For the other monomer, one type may be used alone, two or more types may be used in combination, or three or more types may be used.

In the vinylidene fluoride copolymer, a content of the structural unit derived from the other monomer is not particularly limited, and is, for example, preferably 15 mass% or more, more preferably 15 mass% or more and 40 mass% or less, and still more preferably 20 mass% or more and 35 mass% or less with respect to all structural units of the copolymer from the viewpoint of miscibility with a dispersion medium and a solvent.

Also in a case where the vinylidene fluoride polymer is a copolymer containing a structural unit derived from vinylidene fluoride and a structural unit derived from hexafluoropropylene or a copolymer consisting only of these two structural units, a content of the structural unit derived from hexafluoropropylene is not particularly limited, and is, for example, preferably 15 mass% or more, more preferably 15 mass% or more and 40 mass% or less, and still more preferably 20 mass% or more and 35 mass% or less with respect to all the structural units of the copolymer from the viewpoint of adhesiveness of the electrode slurry.

A molecular weight of the binder is not particularly limited, and is preferably 200000 or more and 1500000 or less, more preferably 300000 or more and 1000000 or less.

A method for preparing the vinylidene fluoride polymer as the binder is not particularly limited, and is normally a method such as suspension polymerization, emulsion polymerization, or solution polymerization. From the viewpoint of ease of post-treatment and the like, aqueous-system suspension polymerization and emulsion polymerization are preferable, and emulsion polymerization that produces a polymer having a smaller particle size is more preferable from the viewpoint of dispersibility of particles.

A preparation example of the emulsion polymerization method will be described below. First, in a case where the vinylidene fluoride copolymer is prepared, vinylidene fluoride and any other monomer, a liquid medium, and an emulsifier are mixed in an autoclave. The liquid medium is a liquid in which vinylidene fluoride or the like is hardly soluble. Then, a polymerization initiator that can be dissolved in the liquid medium is added to the liquid mixture to polymerize vinylidene fluoride, a fluorine-containing alkyl vinyl compound, and the like. In a case where a homopolymer of vinylidene fluoride is prepared, only vinylidene fluoride may be used as a monomer in place of vinylidene fluoride and any other monomer in the above case.

In this example, the pressure within the autoclave during polymerization is preferably maintained at approximately the same pressure for a certain period of time from the start of the polymerization, and is particularly preferably maintained at the same pressure from the start of the polymerization (polymerization yield: 0%) until the polymerization yield reaches 90% or more. Examples of a method for maintaining the pressure at the start of the polymerization include a method for adding monomers immediately after adding the initiator. Furthermore, the pressure in the autoclave during polymerization is preferably from 0 to 20 MPa, more preferably from 0.5 to 15 MPa, and still more preferably from 1 to 10 MPa.

The liquid medium used in the emulsion polymerization is not particularly limited as long as the monomers are hardly soluble in the liquid. The monomers are hardly soluble in water. Thus, water is used as an example of the liquid medium.

On the other hand, the emulsifier is not particularly limited as long as it is capable of forming micelles containing monomers in the liquid medium and stably dispersing the polymer to be synthesized in the liquid medium, and, for example, known surfactants can be used. The emulsifier may be a non-ionic surfactant, a cationic surfactant, an anionic surfactant, or an amphoteric surfactant, or these may be used in combination. Examples of the emulsifier include a perfluorinated surfactant, a partially fluorinated surfactant, and a non-fluorinated surfactant, which are traditionally used in the polymerization of polyvinylidene fluoride. Among the surfactants, perfluoroalkyl sulfonic acid and a salt thereof, perfluoroalkyl carboxylic acid and a salt thereof, and a fluorine-based surfactant having a fluorocarbon chain or a fluoropolyether chain are preferable, and perfluoroalkyl carboxylic acid and a salt thereof are more preferable. As the emulsifier, one selected from the above emulsifiers can be used alone, or two or more thereof can be used. The added amount of the emulsifier is preferably from 0.0001 to 22 parts by mass when the total amount of monomers used in the polymerization is 100 parts by mass.

The polymerization initiator is not particularly limited as long as the polymerization initiator is a compound that is soluble in the liquid medium and that can polymerize monomers. Examples of the polymerization initiator include known water-soluble peroxides, water-soluble azo-based compounds, and redox initiators. Examples of the water-soluble peroxide include ammonium persulfate and potassium persulfate. Examples of the water-soluble azo compound include 2,2'-azobis-isobutyronitrile (AIBN) and 2,2'-azobis-2-methylbutyronitrile (AMBN). Examples of the redox initiator include ascorbic acid-hydrogen peroxide. Among these, the water-soluble peroxide is preferable from the perspective of reactivity and the like. These polymerization initiators may be used alone or two or more types may be used in combination. The added amount of the polymerization initiator is preferably from 0.01 to 5 parts by mass when the total amount of monomers used in the polymerization is 100 parts by mass.

Note that the emulsion polymerization method may be a soap-free emulsion polymerization method, a mini-emulsion polymerization method, or a seed emulsion polymerization.

The soap-free emulsion polymerization method is a method of emulsion polymerization without using an ordinary emulsifier such as that as described above. The vinylidene fluoride copolymer obtained by soap-free emulsion polymerization is preferred because the emulsifier does not remain in the copolymer particles.

In addition, in the soap-free emulsion polymerization method, as the emulsifier, a reactive emulsifier having a polymerizable double bond in the molecule can be used. The reactive emulsifier forms the micelles in the system at the beginning of the polymerization. However, as the polymerization proceeds, the reactive emulsifier is used as a monomer in the polymerization reaction and consumed. Therefore, there is almost a non-existent liberation state in the final resulting reaction system. Therefore, there is an advantage that the reactive emulsifier hardly bleeds out to the particle surfaces of the obtained vinylidene fluoride copolymer.

Examples of the reactive emulsifier include polyoxyalkylene alkenyl ether, sodium alkyl allyl sulfosuccinate, sodium methacryloyloxy polyoxypropylene sulfate, and alkoxy polyethylene glycol methacrylate.

On the other hand, in the mini-emulsion polymerization method, a strong shearing force is applied using an ultrasonic oscillator or the like to miniaturize monomer oil droplets to a submicron size, and then polymerization is performed. At this time, known hydrophobes are added to the liquid mixture to stabilize the miniaturized monomer oil droplets. In the mini-emulsion polymerization method, a polymerization reaction ideally occurs only in each monomer oil droplet such that each oil droplet becomes a vinylidene fluoride polymer (fine particles). Therefore, a particle size, a particle size distribution, and the like of the obtained vinylidene fluoride polymer are easily controlled.

Seed emulsion polymerization is a polymerization performed by coating the fine particles obtained by the above-described polymerization methods with a polymer formed from other monomers. A monomer, a liquid medium, a surfactant, a polymerization initiator, or the like is further added to a dispersion of the fine particles and polymerized.

Here, in any of the emulsion polymerization methods described above, a chain transfer agent may be used to adjust a degree of polymerization of the obtained vinylidene fluoride polymer particle. Examples of the chain transfer agent include ethyl acetate, methyl acetate, diethyl carbonate, acetone, ethanol, n-propanol, acetaldehyde, propylaldehyde, ethyl propionate, and carbon tetrachloride.

Additionally, if needed, a pH buffer may be used. Examples of the pH buffer include an electrolyte substance having a buffer capacity such as sodium dihydrogen phosphate, disodium hydrogen phosphate, and potassium dihydrogen phosphate; and a basic substance such as sodium hydroxide, potassium hydroxide, barium hydroxide, calcium hydroxide, and ammonia.

An optional component such as an anti-settling agent, a dispersion stabilizer, a corrosion inhibitor, an anti-fungal agent, and a wetting agent may be used, if needed. The added amount of the optional component is preferably from 0.005% to 10%, and more preferably from 0.01% to 7% with respect to the liquid medium.

In the polymerization of the vinylidene fluoride polymer, a polymerization temperature may be selected as appropriate depending on the type of polymerization initiator and the like. For example, the temperature may be set to from 0°C to 120°C, preferably from 20°C to 110°C, and more preferably from 40°C to 100°C. Although a polymerization time is not particularly limited, the polymerization time is preferably from 1 to 24 hours considering the productivity.

### Organic Solvent

The organic solvent is any one of a cyclic ether, a ketone, and an ester, and has a boiling point of 60°C or higher and 160°C or lower, preferably 90°C or higher and 155°C or lower, and more preferably 110°C or higher and 150°C or lower, from the viewpoints of handling, safety, and drying properties of the slurry during manufacture.

The organic solvent preferably has low hydrophilicity. If the organic solvent is highly hydrophilic, the solvent easily adsorbs moisture from the atmosphere. In addition, the moisture in the organic solvent is hardly removed even after performing dehydration treatment, and thus a large amount of moisture may remain.

The hydrophilicity of the organic solvent can be evaluated by a residual moisture content of the organic solvent after a specific dehydration treatment. Specifically, 1 L of the organic solvent and 100 g of molecular sieve are put into a container with a lid, the container is sealed, the mixture is occasionally stirred, and then the residual moisture content of the organic solvent after 24 hours is measured. It is thought that the organic solvent having a lower residual moisture content after the dehydration treatment has lower hydrophilicity. When water contained in the organic solvent reacts with the solid electrolyte, the solid electrolyte may deteriorate, resulting in a decrease in ionic conductivity. Therefore, the organic solvent has a residual moisture content of 300 ppm or less, preferably 150 ppm or less, and more preferably 50 ppm or less after the dehydration treatment.

In a case where the organic solvent contains a large amount of moisture, the organic solvent is dehydrated to remove residual moisture to 300 ppm or less before use. A method for dehydrating the organic solvent is not particularly limited, and is preferably a method of adding a molecular sieve, a method of adding an alkali metal or benzophenone and distilling the mixture, or a method of using a Grubbs column, for example. From the viewpoint of preventing a decrease in ionic conductivity of the solid electrolyte, the moisture content in the organic solvent is 300 ppm or less, preferably 150 ppm or less, and more preferably 50 ppm or less.

Examples of such an organic solvent include dioxane, ethyl butyrate, amyl acetate, isopropyl acetate, ethyl propionate, and tetrahydrofuran.

### Other Components

The binder solution for an all-solid-state battery of the present invention may contain components other than the binder and the organic solvent (hereinafter, also referred to as "other components") as long as the effects of the present invention are not impaired. Examples of the other components include an anti-settling agent, a dispersion stabilizer, a thickener, and an adhesion auxiliary agent.

### Binder Solution Production Method

The binder solution of the present invention can be prepared by mixing the binder, the above-described specific organic solvent, and, if needed, the other components.

The binder solution of the present invention is a solution in which the specific binder used in the present invention is uniformly dissolved in the specific organic solvent. Further, the binder solution is visually transparent.

A content of the binder is not particularly limited, and is preferably 0.1 mass% or more and more preferably 1 mass% or more with respect to a total amount of the binder solution.

### Slurry

The slurry of the present invention contains the binder solution and a solid electrolyte. The slurry (electrode mixture) further containing an active material includes a positive electrode slurry and a negative electrode slurry. A positive electrode active material is used as the active material in the positive electrode slurry and a negative electrode active material is used as the active material in the negative electrode mixture slurry. Hereinafter, each component forming the slurry will be described.

### Positive Electrode Active Material

As the positive electrode active material, a positive electrode active material known as a positive electrode active material of a solid-state battery can be used. For example, a lithium-based positive electrode active material containing lithium is preferable. Examples of the lithium-based positive electrode active material include composite metal chalcogenide compounds represented by the general formula LiMY₂ (wherein M is at least one of transition metals such as Co, Ni, Fe, Mn, Cr, and V, and Y is a chalcogen element such as O or S) such as LiCoO₂ or LiNi_{X}C_{01-X}O₂ (0 < x ≤ 1); composite metal oxides having a spinel structure such as LiMn₂O₄, and olivine-type lithium compounds such as LiFePO₄. A commercially available product may also be used as the positive electrode active material.

### Negative Electrode Active Material

As the negative electrode active material, a negative electrode active material known as a negative electrode active material of a solid-state battery can be used. In particular, it is preferable to use a negative electrode active material capable of storing and releasing lithium ions. Examples of the negative electrode active material include lithium alloys, metal oxides, carbon materials such as graphite and hard carbon, silicon and silicon alloys, and Li₄Ti₅O₁₂. Graphite is particularly preferable. The form of the negative electrode active material is not particularly limited, and is preferably a powder form.

### Solid Electrolyte

The solid electrolyte is not particularly limited as long as it is a solid compound having ionic conductivity, and known inorganic solid electrolytes and polymer solid electrolytes can be used. Examples of the inorganic solid electrolyte include an oxide-based solid electrolyte, a sulfide-based solid electrolyte, a nitride-based solid electrolyte, and a complex hydride solid electrolyte. Examples of the polymer solid electrolyte include a gel-based electrolyte and an intrinsic polymer electrolyte.

The oxide-based solid electrolyte is not particularly limited, and examples thereof include perovskite-type LLTO, garnet-type LLZ, NASICON-type compounds, LISICON-type compounds, LIPON-type compounds, and β-alumina-type compounds. Specific examples include: Li₃PO₄, Li_{0.34}La_{0.51}TiO₃, Li_{1.3}Al_{0.3}Ti_{1.7}(PO₄)₃, Li₇La₃Zr₂O₁₂, Li₆BaLa₂Ta₂O₁₂, Li_{2.9}PO_{3.3}N_{0.46}, L_{14.3}Al_{0.3}Si_{0.7}O₄, 50Li₄SiO₄-50Li₃BO₃, Li₂O-Al₂O₃-SiO₂-P₂O₅-TiO₂, and Li_{1.5}Al_{0.5}Ge_{1.5}(PO₄)₃-0.05Li₂O.

The sulfide-based solid electrolyte is not particularly limited, and examples thereof include a solid electrolyte containing Li, A (A is at least one of P, Si, Ge, Al, and B), and S, and the sulfide-based solid electrolyte may further contain a halogen element. In addition, examples of the sulfide-based solid electrolyte include LGPS-type compounds, argyrodite-type compounds, amorphous-based compounds, and Li-P-S-based compounds. Specific examples of the sulfide-based solid electrolyte include Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, Lil-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li_{3.25}P_{0.75}Ge_{0.25}S₄, Li₁₀GeP₂S₁₂, Li₄₋ₓGe₁₋ₓPₓS₄, Li₆PS₅Cl, Li₆PS₅Br, and Li₆PS₅I.

The nitride-based solid electrolyte is not particularly limited, and a specific example thereof is LiN₃.

The complex hydride solid electrolyte is not particularly limited, and a specific example thereof is LiBH₄.

The gel-based electrolyte is not particularly limited, and specific examples thereof include poly(ethylene oxide)₈-LiClO₄(ethylene carbonate (EC) + propylene carbonate (PC)), polyethylene oxide)₈-LiClO₄(PC), poly(vinylidene fluoride)-LiN(CF₃SO₂)₂(EC + PC), poly(vinylidene fluoride-cohexafluoropropylene)-LiPF₆(EC + diethyl carbonate (DEC) + dimethyl carbonate (DMC)), poly(ethylene glycol acrylate)-LiClO₄(PC), and poly(acrylonitrile)-LiClO₄(EC + PC), and poly(methyl methacrylate)-LiClO₄(PC).

The intrinsic polymer electrolyte is not particularly limited, and specific examples thereof include poly(ethylene oxide)₈-LiClO₄, poly(oxymethylene)-LiClO₄, polypropylene oxide)₈-LiClO₄, poly(dimethyl siloxane)-LiClO₄, poly(vinylidene fluoride-co-hexafluoropropylene)-LiTFSI, poly(2,2-dimethoxypropylene carbonate)-LiFSI, and poly[(2-methoxy)ethylglycidyl ether]₈-LiClO₄.

These solid electrolytes may contain only one type or two or more types of the electrolytes.

### Other Components

The slurry of the present invention may contain components other than the binder solution, the active material, and the solid electrolyte (hereinafter, also referred to as "other components") as long as the effects of the present invention are not impaired. Examples of the other components include a conductive auxiliary, a thickener, an anti-settling agent, a dispersion stabilizer, and an adhesion auxiliary agent.

### Slurry Production Method

The slurry of the present invention can be prepared by mixing the binder solution, the solid electrolyte, and, if needed, the active material and other components. The content of each of the above components may be any content as long as the solid electrolyte layer formed from the slurry appropriately functions, and known contents can be adopted.

### Solid Electrolyte Layer

The solid electrolyte layer of the present invention can be obtained by applying the slurry to the surface of a current collector or electrode and drying the slurry. The method of application is not particularly limited and, for example, a doctor blade method, a reverse roll method, a comma bar method, a gravure method, an air knife method, a die coating method, and a dip coating method can be used. Furthermore, after application of the slurry, it is common to heat the slurry at any temperature to dry the solvent. The drying may be performed multiple times at various temperatures. During the drying, pressure may be applied. After the drying, heat treatment may be further performed. In one example, the heat treatment is performed at 50°C or higher and 300°C or lower for 10 seconds or more and 300 minutes or less.

The ionic conductivity of the obtained solid electrolyte layer is not particularly limited, and is preferably 0.05 × 10⁻³ S/cm or more, more preferably 0.07 S/cm or more, and still more preferably 0.09 S/cm or more.

### Electrode

In one form, the electrode of the present invention includes the solid electrolyte. More specifically, the electrode of the present invention includes a current collector and the solid electrolyte layer (electrode mixture layer) formed on a surface of the current collector.

The electrode mixture layer is obtained by applying the slurry (electrode mixture) containing the active material according to the present invention to the current collector, and drying the slurry.

The current collector is not particularly limited, and can be a metal foil of aluminum, copper, iron, stainless steel, steel, nickel, or titanium, or metal steel. Furthermore, the surface of another medium may be coated with the above metal foil, metal steel, or the like.

After the coating and drying, press treatment may be further performed. In one example, the press treatment is performed at 1 kPa or more and 10 GPa or less. Performing the press treatment can increase the electrode density.

### All-solid-state Battery

The all-solid-state battery of the present invention includes the solid electrolyte layer. More specifically, in the all-solid-state battery of the present invention, a positive electrode, a solid electrolyte layer, and a negative electrode may be layered, or an electrode having a solid electrolyte layer (electrode mixture layer) may be used as either of the positive electrode and the negative electrode as described above. If an electrode not produced by the method of the present invention is to be used, known electrodes can be used, and known solid electrolytes can also be used for the solid electrolyte layer.

### EXAMPLES

The present invention will be described in further detail hereafter based on Examples and Comparative Examples, but the present invention is not limited to the following examples.

### Preparation Example of Binder

To an autoclave, 280 parts by mass of ion-exchanged water was added and the autoclave was degassed by nitrogen bubbling for 30 min. Next, 0.2 parts by mass of disodium hydrogen phosphate and 0.003 parts by mass of polyoxyethylene alkylene alkyl ether were added. The autoclave was pressurized to 4.5 MPa and then purged with nitrogen gas, which were repeated three times. Then, 0.1 parts by mass of ethyl acetate, 8 parts by mass of vinylidene fluoride (VDF), and 27 parts by mass of hexafluoropropylene (HFP) were added to the autoclave. The temperature was increased to 80°C while the mixture was stirred. Then, 5 mass% of ammonium persulfate (APS) aqueous solution was added so that the APS amount became 0.06 parts by mass, and then polymerization was started. Internal pressure at this time was set to 2.5 MPa. From immediately after starting the polymerization, 65 parts by mass of VDF were continuously added to maintain the internal pressure at 2.5 MPa at the start of the polymerization. After the VDF was added, the polymerization was completed when the pressure dropped to 1.5 MPa, and a latex (resin composition) was obtained. The solid content concentration of the obtained latex (concentration of vinylidene fluoride copolymer) was 21.0 mass%. Thereafter, only the vinylidene fluoride copolymer was taken out from the latex by salting-out to obtain a binder (VDF/HFP) composed of the vinylidene fluoride copolymer in which VDF:HFP = 73 mass%:27 mass%.

### Preparation of Binder Solution

### Examples 1 to 6 and Comparative Examples 1 to 3

### Binder

In Examples 1 to 6 and Comparative Examples 1 to 3, the vinylidene fluoride copolymer VDF/HFP prepared as described above was used as the binder.

### Organic Solvent

In Examples 1 to 6 and Comparative Examples 1 to 3, the following organic solvent used was subjected to a dehydration treatment which will be described below.

### Type of Organic Solvent

Dioxane (available from FUJIFILM Wako Pure Chemical Corporation)
Ethyl butyrate (available from FUJIFILM Wako Pure Chemical Corporation) Amyl acetate (available from Tokyo Chemical Industry Co., Ltd.)
Isopropyl acetate (available from Tokyo Chemical Industry Co., Ltd.)
Ethyl propionate (available from Tokyo Chemical Industry Co., Ltd.)
Tetrahydrofuran (available from FUJIFILM Wako Pure Chemical Corporation)
Ethylene glycol monobutyl ether acetate (available from Tokyo Chemical Industry Co., Ltd.)
Butyl butyrate (available from Kishida Chemical Co., Ltd.)
Morpholine (Tokyo Chemical Industry Co., Ltd.)

### Dehydration Treatment of Organic Solvent

For dioxane and tetrahydrofuran, a super dehydrated solvent (moisture content: 10 ppm or less) was used. For other organic solvents, to remove moisture, 1 L of the organic solvent and 100 g of molecular sieve 3A were put into a container with a lid, and the container was sealed. The mixture was occasionally stirred, and the residual moisture in the organic solvent after 24 hours was measured. The molecular sieve used was a molecular sieve dried overnight at 300°C under reduced pressure. The residual moisture was measured by applying the principle of the Karl Fischer reaction to a coulometric titration method using a trace moisture measuring apparatus (CA-100 type available from Mitsubishi Chemical Corporation). The obtained residual moisture is shown in Table 1.

### Preparation of Binder Solution

5 parts by mass of the binder in a powder form and 95 parts by mass of the organic solvent after the dehydration treatment were mixed, and the mixture was stirred while being heated in an oil bath at 70°C to prepare a binder solution.

### Evaluation

### Dissolution of Binder

The obtained binder solution was left to stand, and the dissolved state of the binder was visually observed and evaluated according to the following evaluation criteria. The results are indicated in Table 1.
Good (O): The binder solution is uniform and transparent.
Poor (×): Turbidity or precipitation is observed in the binder solution.

### Production of Solid Electrolyte Layer Model

### Production Example of Solid Electrolyte Layer Model using Organic Solvent Investigated in Examples 1 to 6 and Comparative Examples 1 to 3

The solid electrolyte layer is produced by removing an organic solvent from a slurry containing a binder solution and a solid electrolyte. In this experiment, directly investigate the reactivity of the organic solvent with respect to the solid electrolyte, a solid electrolyte layer model containing no binder was produced, and the ionic conductivity of the solid electrolyte layer model was measured.

Mixed were 200 mg of Li₆SP₅Br, as one type of sulfide-based solid electrolyte, and 2 mL of the organic solvent used in the preparation of each of the binder solutions of Examples 1 to 6 and Comparative Examples 1 to 3. The obtained mixture was left to stand for 1 hour, and then dried by heating under reduced pressure at 90°C for 2 hours to remove the organic solvent. The mixture obtained by using ethylene glycol monobutyl ether acetate as the organic solvent was left to stand for 1 hour, the supernatant liquid was removed by decantation, and the mixture was dried by heating under reduced pressure at 120°C for 2 hours to remove the organic solvent. In a ceramic cylindrical cell having a diameter Φ of 10 mm, 150 mg of the sulfide-based solid electrolyte from which the organic solvent had been removed was placed and pressurized at 500 MPa. The cylindrical cell was fixed with bolts at 8 N and pressed into pellets to produce a solid electrolyte layer model.

### Evaluation

### Ionic Conductivity

The impedance of the obtained solid electrolyte layer model was measured using VersaSTAT4 available from Princeton Applied Research. AC impedance was measured at a frequency of from 1 MHz to 0.1 Hz and a temperature of 25°C, and the ionic conductivity was calculated based on the measurement results. The results are shown in Table 1 as "Ionic conductivity" for Examples 1 to 6 and Comparative Examples 1 to 3.

**Table 1**

| | Organic Solvent | | | Binder | Dissolved state of binder | Ionic conductivity (S/cm) |
|---|---|---|---|---|---|---|
| | Type | Boiling point (°C) | Residual moisture (ppm) | | | |
| Example 1 | Dioxane | 102 | 10 | VDF/HFP | ○ | 1.0 × 10⁻³ |
| Example 2 | Ethyl butyrate | 120 | 6 | VDF/HFP | ○ | 1.0 × 10⁻³ |
| Example 3 | Amyl acetate | 148 | 14 | VDF/HFP | ○ | 1.1 × 10⁻³ |
| Example 4 | Isopropyl acetate | 89 | 2 | VDF/HFP | ○ | 1.1 × 10⁻³ |
| Example 5 | Ethyl propionate | 99 | 4 | VDF/HFP | ○ | 1.2 × 10⁻³ |
| Example 6 | Tetrahydrofuran | 65 | 10 | VDF/HFP | ○ | 1.0 × 10⁻³ |
| Comparative Example 1 | Ethylene glycol monobutyl ether acetate | 192 | 25 | VDF/HFP | × | 0.01 × 10⁻³ |
| Comparative Example 2 | Butyl butyrate | 164 | 16 | VDF/HFP | × | 1.0 × 10⁻³ |
| Comparative Example 3 | Morpholine | 129 | 375 | VDF/HFP | ○ | Unmeasura ble |

As shown in Table 1, in Comparative Example 2 in which butyl butyrate was used as the organic solvent, although the ionic conductivity of the solid electrolyte layer model was high, the binder was not dissolved. In addition, when ethylene glycol monobutyl ether acetate was used as the organic solvent, the binder was not dissolved and the ionic conductivity of the solid electrolyte layer model was low, as shown in Comparative Example 1. In Comparative Example 3 in which morpholine was used as the organic solvent, the binder was dissolved. However, because of the high hydrophilicity of morpholine and a large amount of residual moisture after the dehydration treatment, the ionic conductivity of the solid electrolyte layer model decreased to the measurement limit value or less (unmeasurable). On the other hand, it was found that, when the organic solvents that is any one of a cyclic ether, a ketone, or an ester and has a boiling point of from 60°C to 160°C are used, the binder is dissolved in any of the solvents and the ionic conductivity of the solid electrolyte layer models is also increased, as shown in Examples 1 to 6.

## Claims

1. A binder solution for an all-solid-state battery, the binder solution comprising:
a binder made of a vinylidene fluoride polymer; and
an organic solvent,
wherein the organic solvent is at least one selected from the group consisting of a cyclic ether, a ketone, and an ester,
the organic solvent has a boiling point of 60°C or higher and 160°C or lower, and
a residual moisture content of the organic solvent is 300 ppm or less.

2. The binder solution for an all-solid-state battery according to claim 1, wherein the organic solvent has a boiling point of 80°C or higher and 160°C or lower.

3. The binder solution for an all-solid-state battery according to claim 1 or 2, wherein the organic solvent is at least one selected from the group consisting of 1,4-dioxane, ethyl butyrate, amyl acetate, isopropyl acetate, and ethyl propionate.

4. The binder solution for an all-solid-state battery according to any one of claims 1 to 3,
wherein the vinylidene fluoride polymer is a copolymer including a structural unit derived from vinylidene fluoride and a structural unit derived from hexafluoropropylene, and
a content of the structural unit derived from hexafluoropropylene is 15 mass% or more with respect to all structural units of the copolymer.

5. A slurry comprising:
the binder solution described in any one of claims 1 to 4; and
a solid electrolyte.

6. A solid electrolyte layer produced from the slurry described in claim 5, wherein the solid electrolyte layer has an ionic conductivity of 0.05 × 10⁻³ S/cm or more.

7. An electrode mixture comprising:
the slurry described in claim 5; and
an active material.

8. An electrode comprising the solid electrolyte layer described in claim 6.

9. An all-solid-state battery comprising the solid electrolyte layer described in claim 6.
